Europäisches Patentamt

**European Patent Office**

**Office européen des brevets**

(19)

(11) Numéro de publication: **0 184 520**
A2

# (12) DEMANDE DE BREVET EUROPEEN

(21) Numéro de dépôt: 85402428.8

(22) Date de dépôt: 06.12.85

(51) Int. Cl.⁴: **B 29 C 33/02**
B 29 C 33/34, B 29 C 67/14
H 05 B 3/12

(30) Priorité: 07.12.84 FR 8418764

(43) Date de publication de la demande:
11.06.86 Bulletin 86/24

(84) Etats contractants désignés:
DE FR GB IT NL SE

(71) Demandeur: CONSTRUCTIONS MECANIQUES DE NORMANDIE
26, rue de Montévidéo
F-75116 Paris(FR)

(72) Inventeur: Nedelec, Gilles
145, rue du Val de Saire
F-50100 Cherbourg(FR)

(72) Inventeur: Ingouf, Léon
Hameau Broquet Theurteville-Hague
F-50690 Martinvast(FR)

(72) Inventeur: Cadot, Daniel
Rue Folie
F-50690 Martinvast(FR)

(74) Mandataire: Behaghel, Pierre et al,
CABINET PLASSERAUD 84 rue d'Amsterdam
F-75009 Paris(FR)

(54) **Perfectionnements aux procédés de fabrication des moules pour coques et pièces minces analogues et aux moules obtenus.**

(57) Pour fabriquer un moule pour coque en composite, moule comportant, pour engendrer les calories nécessaires au chauffage de la coque en cours de moulage (1), un tapis électriquement chauffant (4) placé directement au contact de la surface extérieure ou intérieure de la coque, ledit tapis comprenant des bandes métalliques minces parallèles entourées de matière isolante et reliées électriquement entre elles, on met en forme sur place, sur un support rigide approprié (7 ou 1), une première feuille de tissu de verre ou analogue imprégné de résine, on déroule sur cette première feuille une bande métallique prévue autocollante sur l'une de ses faces, avec sa face autocollante tournée vers la feuille, de façon à former une suite de brins parallèles collés sur ladite feuille, et on recouvre le tout par une seconde feuille de tissu de verre ou analogue imprégnée de résine.

EP 0 184 520 A2

./...

FIG.1.

0184520

<u>Perfectionnements aux procédés de fabrication des moules</u>
<u>pour coques et pièces minces analogues et aux moules</u>
<u>obtenus.</u>

L'invention concerne le moulage des pièces minces du genre des coques qui sont constituées en un matériau "composite", c'est-à-dire composées d'une part de feuilles en tissu de verre ou analogue imprégné de résine et d'autre part d'éléments de remplissage tels que des pains de mousse ou des blocs de bois.

Les pièces minces en question seront appelées "coques" dans la suite pour clarifier l'exposé, mais à titre bien entendu non limitatif.

Dans les modes de moulage connus de ces coques, on commence par mettre en place les différents composants de la coque contre la surface intérieure d'un moule de mise en forme, puis on porte l'ensemble de ce moule et de son garnissage dans un four ou autoclave à une température suffisante pour ramollir la résine sans la liquéfier totalement de façon à assembler définitivement entre eux les différents composants.

Un tel moulage n'est envisageable que pour des coques relativement petites telles que celles des canots ou dériveurs : pour les coques de grande longueur, les dimensions des fours de chauffage correspondants seraient prohibitives et il ne serait plus possible de conduire la chauffe de façon à obtenir une température rigoureusement égale sur toute la surface de la coque, comme il est requis pour éviter à la fois les coulages locaux et les insuffisances de cuisson locales.

Pour écarter cet inconvénient et donc rendre possible le moulage de coques en matériau composite de plus grandes dimensions, telles que celles constitutives des éléments de fuselage d'avion, il a déjà été proposé d'engendrer les calories nécessaires au chauffage de la coque en cours de formation par l'intermédiaire de tapis électriquement chauffants placés directement au contact de la surface extérieure et de la surface intérieure de cette coque.

Dans les modes de réalisation connus, ces tapis chauffants sont constitués par des rubans minces en acier enveloppés individuellement dans des gaines isolantes et maintenus parallèles les uns aux autres à l'aide de bandes en fibres de verre entrelacées dans ces rubans, lesdits rubans étant montés électriquement en parallèle entre eux à l'aide de barres de distribution de courant électrique connectées aux extrémités de ces rubans.

Les tapis chauffants de ce genre, dont la texture rappelle celle des nappes de vannerie tressées à mailles serrées, présentent un certain nombre d'inconvénients et en particulier les suivants :
- ils sont nécessairement fabriqués en usine avant leur mise en place sur les moules et contre-moules, ce qui rend difficile, voire exclut, leur adaptation sur les irrégularités locales de relief de ces pièces,
- ils sont relativement coûteux, ce qui rend leur utilisation prohibitive pour la réalisation des coques de très grandes dimensions.

L'invention a pour but, surtout, d'écarter ces inconvénients en rendant possible le moulage de coques de très grandes dimensions, telles que les coques des bateaux de longueur supérieure à 10 mètres, cette longueur pouvant atteindre ou même dépasser 50 mètres.

A cet effet les moules considérés comportent encore un tapis chauffant comprenant des bandes métalliques minces parallèles entourées de matière isolante et reliées électriquement entre elles et les procédés de fabrication de ces moules sont essentiellement caractérisés selon l'invention en ce que l'on met en forme sur place, sur un support rigide approprié, une première feuille de tissu de verre ou analogue imprégné de résine, en ce que l'on déroule sur cette première feuille une bande métallique prévue autocollante sur l'une de ses faces, avec sa face autocollante tournée vers la feuille, de façon à former une suite de brins parallèles collés sur ladite feuille, et en ce que l'on recouvre le tout par une seconde feuille de tissu de verre ou analogue imprégnée de résine.

Selon un perfectionnement préféré, on plie doublement à 90 degrés la bande métallique en cours de déroulement aux extrémités des brins parallèles successifs de façon à obtenir une suite de brins raccordés entre eux en série selon des zigzags.

Le moule, quant à lui, présente les caractéristiques découlant des procédés ainsi définis.

Avantageusement, les bandes métalliques qui constituent les résistances électriques de son tapis chauffant sont constituées en plomb et présentent une largeur comprise entre 10 et 50 mm et une épaisseur comprise entre 0,1 et 0,5 mm.

L'invention comprend, mises à part ces dispositions principales, certaines autres dispositions qui s'utilisent de préférence en même temps et dont il sera plus explicitement question ci-après.

Dans ce qui suit l'on va décrire un mode de réalisation préféré de l'invention en se référant au dessin ci-annexé d'une manière bien entendu non limitative.

La figure 1, de ce dessin, montre en coupe transversale partielle schématique l'ensemble d'un moule, d'une coque et d'un contre-moule établi selon l'invention, ladite coque étant celle d'un bateau de grande longueur.

La figure 2 montre à plus grande échelle en coupe partielle l'un des tapis chauffants de cet ensemble.

La figure 3 montre comment sont raccordées entre elles les bandes constituant l'élément chauffant d'un tel tapis.

On se propose de fabriquer une coque 1 de bateau de grande longueur, par exemple de longueur supérieure à 30 mètres, constituée en "composite".

Un tel composite comprend :

- des blocs rigides ou semi-rigides 2 constitués en un matériau léger non métallique qui peut être du bois, des particules agglomérées, mais est de préférence une mousse de polyuréthane,

- et des feuilles 3 en tissu de verre ou analogue imprégné de résine ou en résine armée par des fibres ou fils de verre ou analogue.

Dans le mode de réalisation préféré illustré les blocs 2 en question sont des pains prismatiques de section trapézoïdale enveloppés individuellement par des feuilles 3 telles que définies ci-dessus, ces pains sont juxtaposés côte à côte le long de leur faces latérales et l'ensemble est inséré entre deux feuilles 3 parallèles du type ci-dessus.

L'épaisseur de la coque 1 est de l'ordre de 5 cm pour une longueur de l'ordre de 30 mètres.

Comme il est connu, la fabrication en question consiste :

- à former des panneaux continus avec les composants (pains et feuilles) du composite en drapant les pains par les feuilles,

- à tapisser avec ces panneaux les parois intérieures d'un moule de soutien et de mise en forme,

- et à chauffer l'ébauche ou "coque crue" ainsi constituée de façon à ramollir la résine mais non à la liquéfier, les différents composants étant ainsi soudés entre eux et formant après refroidissement et démoulage une coque continue rigide étanche et indéformable.

Les calories nécessaires au chauffage de l'ébauche sont apportées directement contre les deux faces de cette ébauche à l'aide de tapis électriquement chauffants 4 appliqués jointivement contre ces deux faces.

Lesdits tapis 4 sont des nappes garnies de résistances électriques susceptibles d'engendrer des calories par effet Joule.

Ces résistances sont constituées par des bandes plates 5 en plomb présentant une largeur comprise entre 10 et 50 mm, de préférence de l'ordre de 25 mm et une épaisseur comprise entre 0,1 et 0,5 mm, de préférence de l'ordre de 0,2 mm.

Ces bandes 5 s'étendent horizontalement parallèlement les unes aux autres, avec un écart mutuel qui est de l'ordre de la moitié de leur largeur et elles sont raccordées entre elles en série à leurs extrémités selon un zigzag.

Chaque raccord est avantageusement obtenu par double pliage de la bande à 90°, ainsi que visible en $5_1$ sur la figure 3.

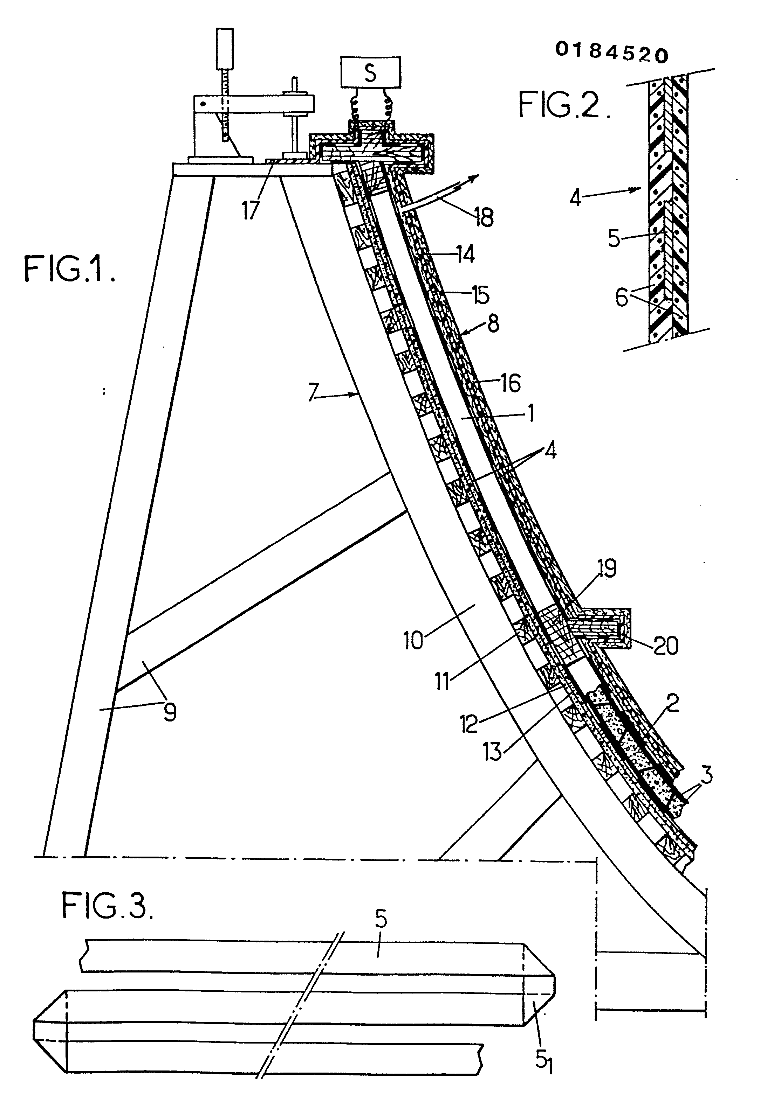

Les bandes 5 sont insérées entre deux feuilles minces 6 (figure 2) en composite, c'est-à-dire constituées chacune par un tissu de verre ou analogue noyé dans une résine, lesdites feuilles 6 étant appliquées l'une contre l'autre.

Pour permettre une mise en place facile de chaque bande 5, malgré sa grande longueur, on rend l'une des faces de cette bande autocollante par un revêtement approprié : les bandes 5 peuvent alors être disponibles sous la forme de rouleaux, comme bien connu pour les rubans adhésifs.

Cette mesure permet d'appliquer très facilement la bande 5 sur l'une des deux feuilles 6, par simple déroulement d'un tel rouleau, en prenant soin d'orienter la face autocollante du côté de ladite feuille 6.

Pour compléter le tapis chauffant stratifié 4, il suffit de former la seconde feuille 6 contre la face, de la première, qui est revêtue de la bande 5, avec ou sans interposition de colle, en appliquant sur cette face des couches stratifiées de tissu de verre ou analogue imprégné de résine.

Chaque tapis chauffant 4, dont l'épaisseur est notamment de l'ordre de 3 mm, est résistant aux températures mises en jeu lors des moulages et de préférence rendu perméable aux vapeurs et liquides par perforation.

La résine qui constitue les feuilles 6 peut être à cet effet une résine d'outillage polymérisable à froid avec durcisseur.

Pour pouvoir appliquer respectivement deux tapis chauffants 4 contre les deux faces de la coque 1, on délimite :

- avec le premier tapis chauffant 4, la face interne d'un support rigide de mise en forme ou moule 7 destiné à recevoir ladite coque,

- et avec le second tapis chauffant 4, la face externe d'un contre-moule 8 destiné à être placé contre la face interne de ladite coque.

Le support 7 comprend successivement, depuis l'extérieur :

- une charpente 9 supportant une série de couples transversaux 10 en contre-plaqué, couples dont les formes évoluent en fonction de la forme désirée pour la coque à mouler,

- des lisses longitudinales en bois 11 disposées horizontalement sur les couples 10,

- et deux feuilles 12 et 13 de mousse, notamment en polyuréthane, dont la première, 12, est collée contre les lisses 11 et dont la seconde, 13, est collée contre la première 12.

C'est contre la seconde feuille en mousse 13 qu'est appliqué le premier tapis chauffant 4 délimitant la face interne du moule.

Le contre-moule 8 comprend, quant à lui, rapportés successivement contre la face interne de la coque 1:

- le second tapis électriquement chauffant 4 défini ci-dessus,
- un tissu de drainage 14 propre à absorber les solvants ou autres liquides qui s'échappent de la coque 1 lors de son chauffage,
- une membrane 15 imperméable à l'air, notamment en une matière plastique telle que le polyéthylène haute densité ou qu'un complexe polyamide (Nylon 6-6),
- et une couche de revêtement en isolant thermique 16, par exemple en laine de roche ou de verre.

La membrane 15 est prolongée à sa périphérie par des bords rabattus 17 qui enveloppent la coque 1 et qui sont assemblés de manière étanche contre le pourtour du moule.

Le but de cet assemblage est de réaliser une poche déformable étanche contenant à la fois la coque 1 et les deux tapis chauffants 4.

La mise sous vide du volume intérieur à ladite poche à travers une conduite 18 se traduit alors par une réduction maximum du volume de cette poche et, par suite, par une forte application de chaque tapis chauffant 4 contre la coque 1 selon l'effet dit de "pelli-placage".

La réalisation de la poche dont il vient d'être question suppose que le moule est lui-même étanche à l'air, ce qui est ici le cas lorsque les mousses constitutives des feuilles 12 et 13 ont une porosité fermée. Si ce n'est pas le cas, on fait comprendre également au moule une membrane étanche à l'air sur le bord de laquelle est assemblé le bord de la membrane 15.

Sur la figure 1, on voit encore que la coque à fabriquer comprend, en plus de ses portions courantes relativement minces à faces parallèles, des inserts 19 présentant des portions 20 en saillie vers l'intérieur de la coque, portions destinées à constituer ultérieurement des attentes pour des cloisons ou planchers ou des raidisseurs.

Ces inserts sont constitués en des matériaux non métalliques, de préférence à l'aide de pièces en mousse et/ou en bois et de tissus de verre ou analogue imprégné de résine.

Comme bien visible sur la figure 1, lesdits inserts 19 sont enveloppés sur toute leur étendue par les différentes feuilles constitutives du contre-moule 8, et en particulier par le tapis chauffant 4 et la membrane 15 constitutives de ce contre-moule.

Ceci étant, la fabrication d'une coque met en oeuvre les opérations suivantes, après exécution du support 7 proprement dit :

- on place sur la face interne de ce support 7 le premier tapis chauffant 4 et une couche de démoulage (par exemple épaisse de quelques 1/100 de mm et constituée en le produit diffusé sous l'appellation MOLD WIZ F 57 par la Société STURGE),

- on met en place sur ce tapis 4 ainsi revêtu l'ébauche de coque 1 en composite, y compris ses attentes 19,

- on revêt intérieurement cette ébauche, avec encore interposition d'une couche de démoulage du genre de la précédente, par le second tapis chauffant 4, puis par le tissu de drainage 14 et par la membrane 15 et enfin par la couche d'isolation thermique 16,

- on assemble les bords de la membrane 15 sur le support 7 de façon à réaliser la poche à vide,

- on fait le vide dans cette poche à travers la conduite 18, notamment en y appliquant une dépression de l'ordre de 0,3 à 0,9 bars,

- on alimente les tapis électriquement chauffants 4 en courant électrique à partir d'une source S de façon à faire croître progressivement et de façon uniforme la température de l'ébauche de coque jusqu'à une valeur maximum donnée,

- on maintient l'ensemble chauffé à sa température maximum pendant une certaine durée comprise entre 12 et 24 heures,

- on laisse refroidir l'ensemble et on procède au démoulage.

Dans des modes de réalisation particulièrement avantageux, la température maximum est de l'ordre de 120° et est atteinte par paliers au terme d'une période de l'ordre de 8 à 9 heures.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment celles où le tissu de verre serait remplacé par un ensemble de fils en fibres de qualités comparables tels que les fibres constituées en carbone, ou encore en un aramide tel que celui diffusé sous l'appellation Kevlar par la Société du Pont de Nemours ou que celui diffusé sous l'appellation Twaron par la Société Akzo.

0184520

# REVENDICATIONS

1. Procédé pour fabriquer un moule pour coque en composite, moule comportant, pour engendrer les calories nécessaires au chauffage de la coque en cours de moulage (1), un tapis électriquement chauffant (4) placé directement au contact de la surface extérieure ou intérieure de la coque, ledit tapis comprenant des bandes métalliques minces parallèles (5) entourées de matière isolante et reliées électriquement entre elles, caractérisé en ce que l'on met en forme sur place, sur un support rigide approprié ( 7 ou 1), une première feuille (6) de tissu de verre ou analogue imprégné de résine, en ce que l'on déroule sur cette première feuille une bande métallique (5) prévue autocollante sur l'une de ses faces, avec sa face autocollante tournée vers la feuille, de façon à former une suite de brins parallèles collés sur ladite feuille, et en ce que l'on recouvre le tout par une seconde feuille (6) de tissu de verre ou analogue imprégnée de résine.

2. Procédé selon la revendication 1, caractérisé en ce que l'on plie doublement à 90 degrés (en $5_1$) la bande métallique en cours de déroulement (5) aux extrémités des brins parallèles successifs de façon à obtenir une suite de brins raccordés entre eux en série selon des zigzags.

3. Moule pour coque en composite, caractérisé en ce qu'il comporte un tapis chauffant établi par le procédé selon la revendication 1 et comprenant donc une succession de brins parallèles constitués en une bande métallique (5) autocollante sur l'une de ses deux faces, brins insérés jointivement entre deux feuilles (6) de tissu de verre ou analogue imprégné de résine.

4. Moule selon la revendication 3, caractérisé en ce qu'il comporte un tapis chauffant établi selon la revendication 2, c'est-à-dire pour lequel les extrémités des brins parallèles successifs de la bande (5) sont raccordées par des tronçons pliés doublement à 90° (en $5_1$), de façon à former des zigzags.

5. Moule selon l'une quelconque des revendications 3 et 4, caractérisé en ce que les bandes métalliques (5) sont en plomb et présentent une largeur comprise entre 10 et 50 mm et une épaisseur comprise entre 0,1 et 0,5 mm.

FIG.1.

FIG.2.

0184520

FIG.3.